# EUROPEAN PATENT SPECIFICATION

(11) **EP 2 230 146 B1**
(45) Date of publication and mention of the grant of the patent: **01.03.2017**
(21) Application number: 10002817.4
(22) Date of filing: 17.03.2010
(51) Int. Cl.: B60W 20/00, B60K 23/00, B60L 3/12, B60L 11/18, B60L 15/20, B60W 10/08, B60W 10/26

(54) **Method of power management for plug-in hybrid and electric vehicle**
Verfahren zur Energieverwaltung für ein Plug-In-Hybrid- und Elektrofahrzeug
Procédé de gestion de l'alimentation pour véhicule électrique et hybride rechargeable

(30) Priority: 17.03.2009 US 210222 P
(43) Date of publication of application: 22.09.2010
(73) Proprietor: Yang,, An-Tao Anthony, Surrey, BC V4N 1M4 (CA); Aleees Eco Ark (Cayman) Co. Ltd., Grand Cayman KY1-1203 (KY)
(72) Inventor: Yang, An-Teo Anthony, Surrey BC V4N 1M4 (CA); Chu, Jui Yang, Taoyuan 33068 (TW)
(74) Representative: Uexküll & Stolberg

(56) References cited:
- DE-A1- 19 807 291
- US-A- 5 539 399
- US-A- 5 815 824
- US-A- 5 892 346

## Description

A system utilizes vehicle location, direction of travel, battery status, destination, and other data to provide control instruction and information to a plug-in hybrid electric vehicle, electric vehicle, or user.

### BACKGROUND

As plug-in hybrid and electric debut, needs for replenishing electric energy arises.

In plug-in hybrid vehicles, both electricity and fossil fuel can be used to propel the vehicle, but minimizing the use of fossil fuel can have many befits such as lowering the cost and decrease emissions. If the battery level in plug-in hybrid vehicles are not managed in a particular manner, the user often arrive home, or a charge station, with a relatively high battery level; thus, the benefit of a plug-in hybrid diminishes greatly.

In electric vehicles, the battery is the only power source; a depleted battery would bring the vehicle to a halt. Before charge station and battery swap station are as fully implemented as gas station, fear of running out of electricity will hinder the sales of electric vehicle.

US 5,815,824 relates to a navigation system suitable for use in an electric automobile, especially hybrid electric automobiles, which easily and properly controls charging state of a battery in the electric automobile while making use of characteristic features of the navigation system. The navigation system is mounted on the electric automobile. A destination, to which one wants to drive by the automobile, is inputted as drive plan information. Based on a distance planned to be driven by the automobile to the destination and a remaining capacity of the battery determined by remaining capacity detector, it is determined whether the automobile can reach the destination with the remaining capacity of the battery.

DE 198 07 291 A1 discloses a method that involves determining the instantaneous vehicle position (X) with a position sensor and comparing it with stored data in a street or area map to determine what type of traffic environment the vehicle is in. The corresponding operating mode of the hybrid drive is set for the particular traffic environment. The traffic environment can be town traffic, long-distance traffic or country traffic.

### OBJECTIVE

The primary objective is to provide a method of power management for plug-in hybrid and electric vehicles in which the use of fossil fuel is minimized.

It is also an objective to provide a method of power management for electric vehicle which prevents depletion of battery.

### SUMMARY

A method to alert user when an electric vehicle requires imminent charging or battery swap is provided.

A method to ensure maximum amount of electricity be charged into a plug-in hybrid vehicle is provided.

### DESCRIPTION OF THE DRAWING

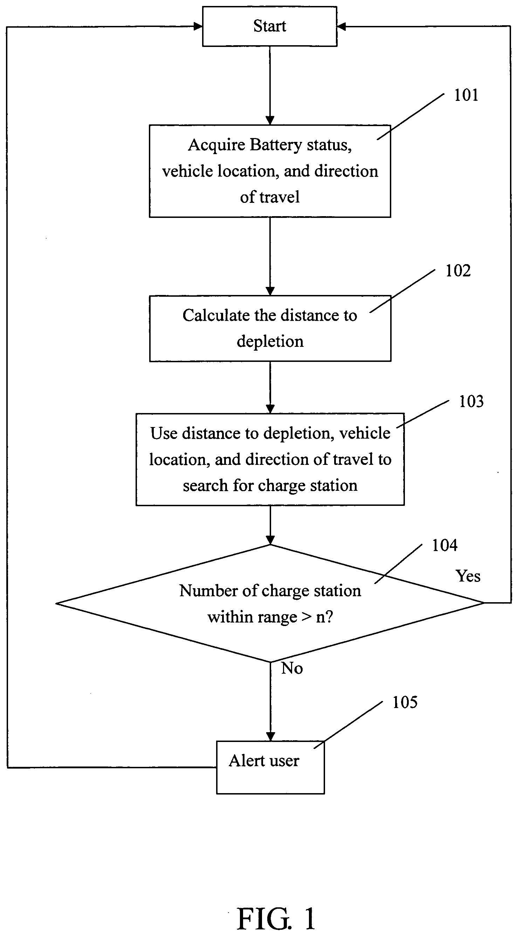

FIGS. 1 to 3 show a flowchart of operation.

### DESCRIPTION

In a first embodiment consistent with the principles of the present invention, as shown in FIG. 1, a power management system capable of locating the vehicle, acquire battery status, providing mode control instructions to the vehicle, and data communication with a database is controlled by method hereafter. While an electric vehicle is in operation, the system will acquire battery status, vehicle location, and direction of travel 101. The battery level will be used to calculate the distance which vehicle can travel before battery depletion 102. The system than take vehicle location as the starting point, and use distance to depletion, and direction of travel to search for charge station within range 103. List of charge stations are acquired from the database via communication link. The charge stations that require a u-turn will not be considered unless it is the last charge station possible. The system may also filter out charge stations that are already full. If the vehicle is designed to cope with battery swap station, the system could show battery swap station as well. The system will then determine if the number of charge station within range are more than a predetermined number n 104. If the number of charge station within range is smaller then the predetermined number n, the user will be alerted 105. This control method can inform the user of an electric vehicle that there is a very limited charge station within range.

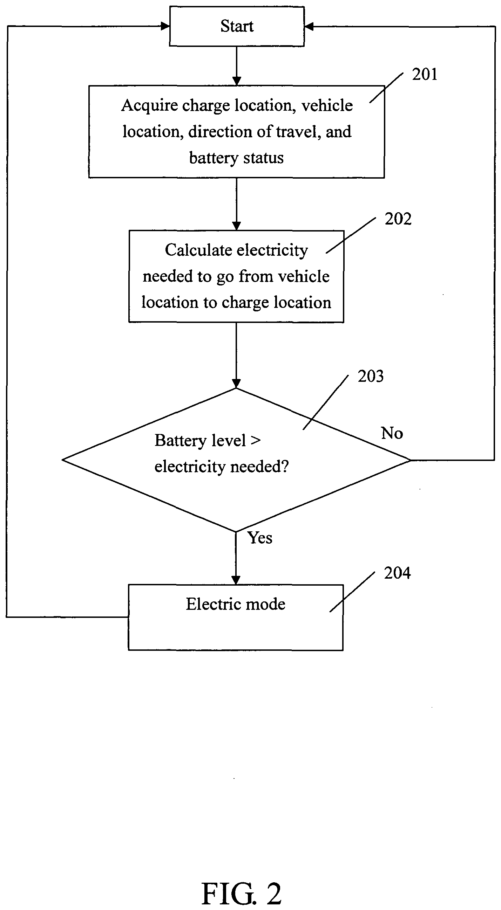

In a second embodiment consistent with the principles of the present invention, as shown in FIG. 2, a power management system capable of locating the vehicle, acquire battery status, providing mode control instructions to the vehicle, and data communication with a database is controlled by method hereafter. While a plug-in hybrid electric vehicle is in operation, the system will acquire a predetermined charge location, vehicle location, direction of travel, and battery status 201. The system then calculates electricity needed from the vehicle's current location to the charge location 202. The direction of travel is used to determine if the vehicle is driving towards or away from the charge location. The system will then compare if the battery level is higher then the electricity needed from the vehicle's current location to the charge position 203. If the battery level is higher than the electricity needed, the system will provide instruction to the vehicle to enter electric mode 204. This can ensure that the vehicle arrive the charge location with a near depleted battery, which the advantage of a plug-in hybrid can be maximized. A button can be provided on the dash of the vehicle which when user press it, the vehicle will automatically record the current location as a useable charge location.

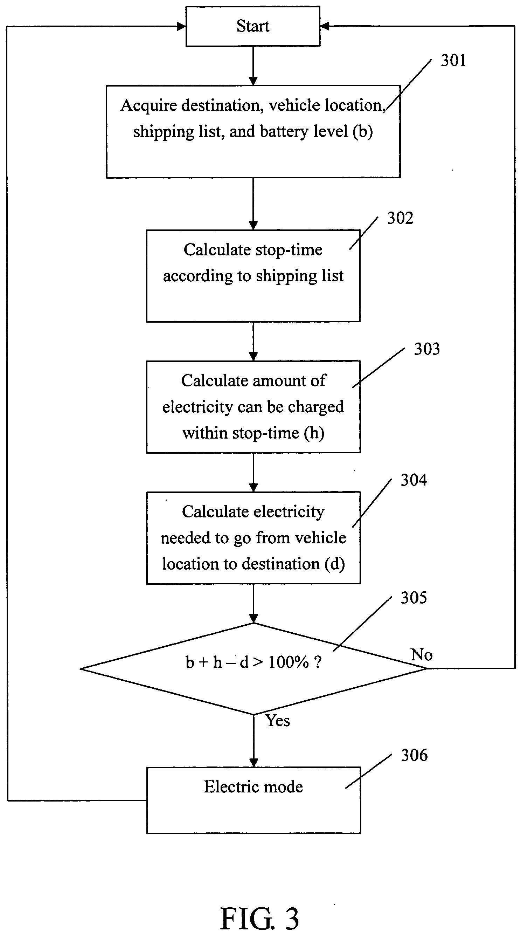

In a third embodiment consistent with the principles of the present invention, as shown in FIG. 3, a power management system capable of locating the vehicle, acquire battery status, providing mode control instructions to the vehicle, and data communication with a database is controlled by method hereafter. While a plug-in hybrid electric vehicle is in shipping operation with known shipping list and destination, the system will acquire destinations and shipping lists from data base via data communication and acquire vehicle location and battery level from onboard unit 301. The system will calculate the stop-time at above mentioned destination according to the shipping-list 302. Time required for delivery for each item on the shipping list is to be provided by the database. The system will calculate how much electricity can be charged within the previously calculated stop-time 303. The system will also calculate the electricity needed from the vehicle's current location to the destination 304. The system then determine if the current battery level plus the electricity can be charged with in stop-time less the electricity needed to travel from current location to destination exceeds the total capacity of the battery 305. If the electricity calculated exceeds the total capacity of the battery, the system will instruct the vehicle to enter electric mode 306. This method will ensure maximum amount of electricity be charge while the vehicle depart from each destination with a full battery.

## Claims

1. A method comprising:
a) acquiring vehicle current location;
b) acquiring battery status;
c) calculating distance to depletion according to said battery status;
d) utilizing said vehicle current location and said distance to depletion to search for charge stations within range;
e) determining if number of charge stations within range is smaller than a predetermined number; and
f) alerting user if said number of charge stations within range is smaller than said predetermined number.

2. The method as defined in claim 1 further comprising:
e1) acquiring direction of travel; and
e2) subtracting number of charge stations that deviates from the said direction of travel from the said number of charge stations within range.

3. The method as defined in claim 1 wherein said charge station includes battery swap station if the vehicle utilizing said method as defined in claim 1 in a type of vehicle that utilizes battery swap station.

4. A method comprising:
a) acquiring charge location;
b) acquiring current vehicle location;
c) acquiring battery level;
d) calculating electricity needed to travel from said current vehicle location to said charge location;
e) determining if said battery level is higher than the said electricity needed to travel from said current vehicle location to said charge location; and
f) instructing the vehicle to enter electric mode if said battery level is higher than the said electricity needed to travel from said current vehicle location to said charge location.

5. The method as defined in claim 4 further comprising recording said current vehicle location as a charge location when user instructs.

6. A method comprising:
a) acquiring destination;
b) acquiring current vehicle location;
c) acquiring shipping list with items for delivery;
d) acquiring battery level;
e) calculating stop-time at the destination according to said shipping list;
f) calculating amount of electricity that can be charged within said stop-time;
g) calculating electricity needed to go from current vehicle location to said destination;
h) determining if the sum of said battery level and said electricity that can be charged within said stop-time less said electricity needed to go from current vehicle location to said destination is in excess of total battery capacity; and
i) instructing the vehicle to enter electric mode if said sum of said battery level and said electricity that can be charged within said stop-time less said electricity needed to go from current vehicle location to said destination is in excess of total battery capacity.

## Patentansprüche

1. Verfahren, umfassend:
a) Erhalten eines aktuellen Fahrzeug-Standorts;
b) Erhalten eines Batteriestatus;
c) Berechnung einer Distanz bis zur Entleerung entsprechend dem Batteriestatus;
d) Verwenden des aktuellen Fahrzeug-Standorts und der Distanz bis zur Entleerung, um nach Ladungsstationen innerhalb der Reichweite zu suchen;
e) Bestimmen, ob die Anzahl der Ladestationen innerhalb der Reichweite kleiner ist als eine vorbestimmte Anzahl; und
f) Alarmieren eines Benutzers, wenn die Anzahl der Ladestationen innerhalb der Reichweite kleiner ist als die vorbestimmte Anzahl.

2. Verfahren nach Anspruch 1, ferner umfassend:
e1) Erhalten einer Fahrtrichtung; und
e2) Subtrahieren der Anzahl der Ladestationen, die von der Fahrtrichtung abweichen, von der Anzahl der Ladestationen innerhalb der Reichweite.

3. Verfahren nach Anspruch 1, wobei die Ladestation eine Batterie-Austausch-Station hat, wenn das Fahrzeug das Verfahren nach Anspruch 1 bei einem Fahrzeugtyp verwendet, der eine Batterie-Austausch-Station benutzt.

4. Verfahren, umfassend:
a) Erhalten eines Lade-Standorts;
b) Erhalten eines aktuellen Fahrzeug-Standorts;
c) Erhalten eines Batterie-Pegels;
d) Berechnen der elektrischen Energie, die erforderlich ist, um von dem aktuellen Fahrzeug-Standort zu dem Lade-Standort zu fahren;
e) Bestimmen, ob der Batterie-Pegel höher ist als die elektrische Energie, die erforderlich ist, um vom aktuellen Fahrzeug-Standort zum Lade-Standort zu fahren; und
f) Instruieren des Fahrzeugs, um in den elektrischen Modus zu wechseln, wenn der Batterie-Pegel höher ist als die elektrische Energie, die erforderlich ist, um vom aktuellen Fahrzeug-Standort zum Lade-Standort zu fahren.

5. Verfahren nach Anspruch 4, ferner umfassend das Aufzeichnen des aktuellen Fahrzeug-Standorts als ein Lade-Standort, wenn der Benutzer dies instruiert.

6. Verfahren, umfassend:
a) Erhalten eines Ziels;
b) Erhalten eines aktuellen Fahrzeug-Standorts;
c) Erhalten einer Versandliste mit Gegenständen zum Versand;
d) Erhalten eines Batterie-Pegels;
e) Berechnen einer Stopp-Zeit am Ziel entsprechend der Versandliste;
f) Berechnen einer Menge an elektrischer Energie, die innerhalb der Stopp-Zeit geladen werden kann;
g) Berechnen der elektrischen Energie, die erforderlich ist, um vom aktuellen Fahrzeug-Standort zum Ziel zu fahren;
h) Bestimmen, ob die Summe aus dem Batterie-Pegel und der elektrischen Energie, die innerhalb der Stopp-Zeit geladen werden kann, abzüglich der elektrischen Energie, die erforderlich ist, um vom aktuellen Fahrzeug-Standort zum Ziel zu fahren, die gesamte Batteriekapazität übersteigt; und
i) Instruieren des Fahrzeugs, in den elektrischen Modus zu wechseln, wenn die Summe aus dem Batterie-Pegel und der elektrischen Energie, die innerhalb der Stopp-Zeit geladen werden kann, abzüglich der elektrischen Energie, die erforderlich ist, um vom aktuellen Fahrzeug-Standort zum Ziel zu fahren, die gesamte Batteriekapazität übersteigt.

## Revendications

1. Procédé comprenant :
a) d'acquérir un emplacement courant de véhicule ;
b) d'acquérir un statut de batterie ;
c) de calculer une distance jusqu'à épuisement en fonction dudit statut de batterie ;
d) d'utiliser ledit emplacement courant de véhicule et ladite distance jusqu'à épuisement pour chercher des stations de charge atteignables ;
e) de déterminer si le nombre de stations de charge atteignables est plus petit qu'un nombre prédéterminé ; et
f) d'alerter l'utilisateur si ledit nombre de stations de charge atteignables est plus petit que ledit nombre prédéterminé.

2. Procédé selon la revendication 1 comprenant en outre :
e1) d'acquérir une direction d'avance ; et
e2) de soustraire le nombre de stations de charge qui dévient de ladite direction d'avance dudit nombre de stations de charge atteignables.

3. Procédé selon la revendication 1 dans lequel ladite station de charge inclut une station d'échange de batterie si le véhicule utilisant ledit procédé tel que défini dans la revendication 1 est un type de véhicule qui utilise une station d'échange de batterie.

4. Procédé comprenant :
a) d'acquérir un emplacement de charge ;
b) d'acquérir un emplacement courant de véhicule ;
c) d'acquérir un niveau de batterie ;
d) de calculer l'électricité nécessaire pour avancer dudit emplacement courant de véhicule jusqu'audit emplacement de charge ;
e) de déterminer si ledit niveau de batterie est supérieur à ladite électricité nécessaire pour avancer dudit emplacement courant de véhicule jusqu'audit emplacement de charge ; et
f) d'ordonner au véhicule d'entrer en mode électrique si ledit niveau de batterie est supérieur à ladite électricité nécessaire pour avancer dudit emplacement courant de véhicule jusqu'audit emplacement de charge ;

5. Procédé selon la revendication 4 comprenant en outre d'enregistrer ledit emplacement courant de véhicule comme un emplacement de charge quand l'utilisateur l'ordonne.

6. Procédé comprenant :
a) d'acquérir une destination ;
b) d'acquérir un emplacement courant de véhicule ;
c) d'acquérir une liste d'expédition avec des objets à livrer ;
d) d'acquérir un niveau de batterie ;
e) de calculer un temps d'arrêt à la destination selon ladite liste de livraison ;
f) de calculer la quantité d'électricité qui peut être chargée pendant ledit temps d'arrêt ;
g) de calculer l'électricité nécessaire pour aller de l'emplacement courant de véhicule jusqu'à ladite destination ;
h) de déterminer si la somme dudit niveau de batterie et de ladite électricité qui peut être chargée dans ledit temps d'arrêt moins ladite électricité nécessaire pour aller de l'emplacement courant de véhicule jusqu'à ladite destination est en excès de la capacité de batterie ; et
i) d'ordonner au véhicule d'entrer en mode électrique si ladite somme dudit niveau de batterie et de ladite électricité qui peut être chargée dans ledit temps d'arrêt moins ladite électricité nécessaire pour aller de l'emplacement courant de véhicule jusqu'à ladite destination est en excès de la capacité de batterie.
